# EUROPEAN PATENT SPECIFICATION

(11) **EP 4 318 426 B1**
(45) Date of publication and mention of the grant of the patent: **15.10.2025**
(21) Application number: 22774988.4
(22) Date of filing: 03.03.2022
(51) Int. Cl.: G08G 1/00, G08B 25/00, G08B 25/04, G16Y 10/40, G16Y 20/20, G16Y 40/10, G08G 1/04, G06V 20/52, G06V 20/56, G06V 40/10, G08B 13/196

(54) **CRIME PREVENTION DEVICE AND CRIME PREVENTION METHOD**
VORRICHTUNG ZUR VERHINDERUNG VON VERBRECHEN UND VERFAHREN ZUR VERHINDERUNG VON VERBRECHEN
DISPOSITIF DE PRÉVENTION DE CRIME ET PROCÉDÉ DE PRÉVENTION DE CRIME

(30) Priority: 24.03.2021 JP 2021049661
(43) Date of publication of application: 07.02.2024
(73) Proprietor: JVCKENWOOD Corporation, Yokohama-shi, Kanagawa 2210022 (JP)
(72) Inventor: TAKAMI, Maki, Yokohama-shi, Kanagawa 221-0022 (JP); SUYAMA, Akinori, Yokohama-shi, Kanagawa 221-0022 (JP); KANIWA, Teruaki, Yokohama-shi, Kanagawa 221-0022 (JP); ENOMOTO, Yoshimi, Yokohama-shi, Kanagawa 221-0022 (JP)
(74) Representative: Carstens, Dirk Wilhelm
(86) International application number: PCT/JP2022/009153
(87) International publication number: WO 2022/202192

(56) References cited:
- WO-A1-2019/098216
- WO-A1-2019/098216
- CN-B- 103 576 683
- JP-A- 2010 250 775
- JP-A- 2017 162 141
- JP-A- 2017 215 181
- JP-A- 2019 117 574
- JP-A- 2019 117 574
- JP-B1- 6 837 650
- JP-B1- 6 837 650
- JP-B2- 6 594 640
- US-A1- 2019 196 494
- US-A1- 2019 347 924

## Description

### TECHNICAL FIELD

The present disclosure relates to a crime prevention device and a crime prevention method.

### BACKGROUND ART

Patent Literature 1 discloses an autonomous driving system that acquires external information of multiple mobile bodies that patrol automatically based on an operation instruction, determines a patrol instruction for each region based on the information acquired from each of the mobile bodies that have traveled in the same region, and generates an operation instruction according to a regional patrol policy that is determined.

### CITATION LIST

### PATENT LITERATURE

Patent Literature 1: JP 2019 117574 A

### SUMMARY OF INVENTION

The autonomous driving system disclosed in Patent Literature 1 acquires a quantity of people as external information, and determines the patrol policy such that the areas with fewer people are patrolled more frequently than the areas with more people. However, the autonomous driving system disclosed in Patent Literature 1 does not consider the attributes of people or the quantity of vehicle traffic (hereinafter, referred to as "vehicle traffic quantity") when determining the patrol policy. For this reason, in a case where people (such as children or elderly people) who are likely to be targeted in a crime are walking in a place where the vehicle traffic quantity is small, it is not possible to detect a situation where there is a high level of risk of such pedestrians being targeted in a crime and to deal with such a situation preferentially.

An object of the present embodiment is to provide a crime prevention device and a crime prevention method that can prevent crimes more effectively by using mobile bodies.

In accordance with the invention, a crime prevention system and a crime prevention method as set forth in the claims are provided. In particular, the crime prevention system is defined in claim 1.

Furthermore the crime prevention method is defined in claim 5.

The present embodiment makes it possible to provide a crime prevention device and a crime prevention method that can prevent crimes more effectively by using mobile bodies.

### BRIEF DESCRIPTION OF THE DRAWINGS

[FIG. 1] FIG. 1 is a diagram illustrating a schematic configuration of a crime prevention system 1 including a crime prevention device according to an embodiment.
[FIG. 2] FIG. 2 is a block diagram illustrating a configuration example of the crime prevention system 1 illustrated in FIG. 1.
[FIG. 3] FIG. 3 is a diagram illustrating the main storage contents of a position information database 221 provided in a storage device 22.
[FIG. 4] FIG. 4 is a diagram illustrating the main storage contents of an attribute information database 222 provided in the storage device 22.
[FIG. 5] FIG. 5 is a diagram illustrating the main storage contents of a risk value database 223 provided in the storage device 22.
[FIG. 6] FIG. 6 is a diagram illustrating a function of the crime prevention device according to the embodiment.
[FIG. 7] FIG. 7 is a flow chart illustrating an operation example of the crime prevention device according to the embodiment.

### DESCRIPTION OF EMBODIMENT

A crime prevention device according to an embodiment will be described below with reference to the drawings. In the description of the drawings, the same portions are denoted by the same reference numerals and the description thereof will be omitted.

### [Outline of crime prevention system]

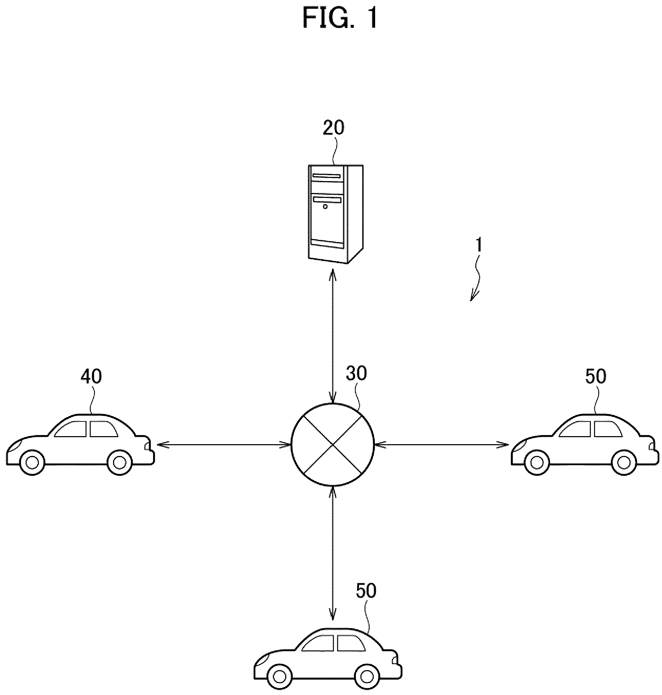

An outline of a crime prevention system 1 including a crime prevention device in an embodiment will be described with reference to FIG. 1. FIG. 1 is a diagram illustrating a schematic configuration of the crime prevention system 1. The crime prevention system 1 according to the present embodiment includes: a vehicle 40 traveling on the road; multiple autonomous driving vehicles 50 performing autonomous driving based on a given patrol instruction; and a server 20 that collects and manages the information transmitted from the vehicle 40 and the autonomous driving vehicles 50 and issues a patrol instruction to the autonomous driving vehicles 50. In the present embodiment, the crime prevention device is implemented as a CPU (central processing unit) 23 of the server 20.

The server 20 and the vehicle 40 and the server 20 and the multiple autonomous driving vehicles 50 are interconnected by a network 30. In the present embodiment, the server 20, the vehicle 40, and the autonomous driving vehicles 50 are connected to the network 30 by a wireless communication method. It should be noted that the crime prevention system 1 illustrated in FIG. 1 includes one vehicle 40 and two autonomous driving vehicles 50 as an example; however, the number of vehicles 40 may be two or more and the number of autonomous driving vehicles 50 may be three or more. The number of vehicles 40 and the number of autonomous driving vehicles 50 are not particularly limited. For example, the multiple autonomous driving vehicles 50 may be vehicles that patrol the road in accordance with a prescribed patrol route for crime prevention measures, or vehicles that are waiting at a prescribed waiting place and start patrolling upon receiving a patrol instruction. A mobile body that is remotely controlled, such as a drone, or automatically driven may be used instead of the multiple autonomous driving vehicles 50. In addition, the server 20 may be installed in the vehicle 40 or the autonomous driving vehicles 50, or the server 20 may be integrated with the vehicle 40 or the autonomous driving vehicles 50.

The vehicle 40 acquires a captured image while traveling. The vehicle 40 may further acquire information related to crime prevention, such as information about the brightness of lights at night, while traveling. The captured image and various types of information acquired by the vehicle 40 are transmitted to the server 20. The vehicle 40 may be a manually driven vehicle driven by the driver, or may be an autonomous driving vehicle.

The server 20 detects a pedestrian from the captured image that is transmitted from the vehicle 40 and calculates a risk level of the detected pedestrian being targeted in a crime. When the risk level is greater than a prescribed value that is preset, the server 20 generates a patrol instruction to patrol the pedestrian travel area of the detected pedestrian, and transmits the generated instruction to the autonomous driving vehicle 50. Upon receiving the patrol instruction, the autonomous driving vehicle 50 generates an operation plan according to the patrol instruction, and travels according to the generated operation plan.

### [Configuration of crime prevention system]

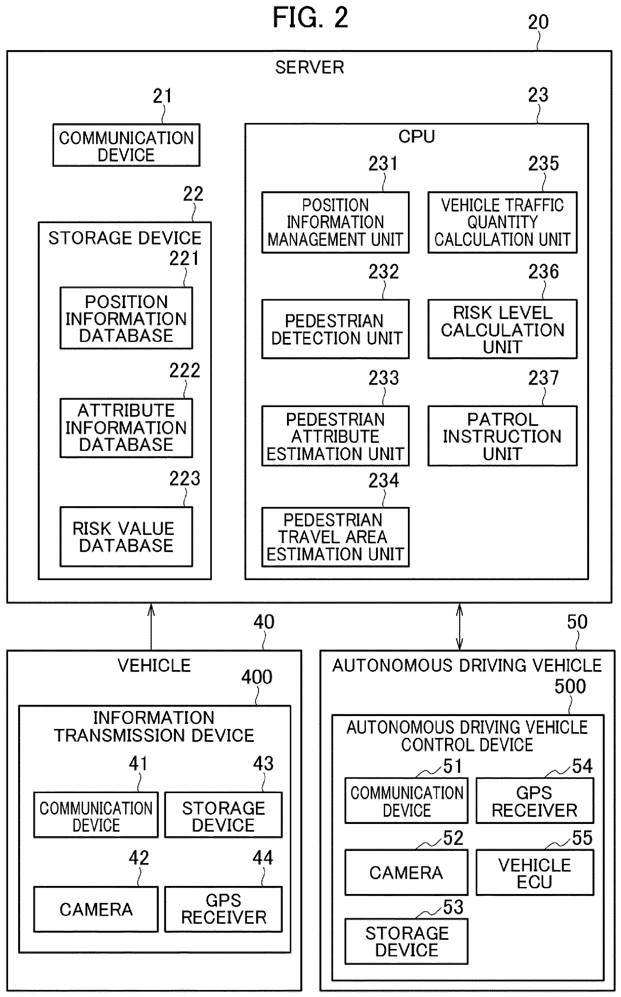

Each component of the crime prevention system 1 will be described in detail with reference to FIG. 2. FIG. 2 is a block diagram schematically illustrating a configuration example of the crime prevention system 1 illustrated in FIG. 1. Although one vehicle 40 and one autonomous driving vehicle 50 are illustrated in FIG. 2, in practice, there may be two or more of each of the vehicle 40 and the autonomous driving vehicle 50. The crime prevention system 1 according to the present embodiment manages individual vehicle IDs to identify each of the vehicle 40 and the autonomous driving vehicle 50 such that each of the vehicle 40 and the autonomous driving vehicle 50 registered in advance can be specified individually. The crime prevention system 1 may manage the ID of an information transmission device 400 installed in each vehicle 40 as the vehicle ID of the vehicle 40, or may manage the ID of an autonomous driving vehicle control device 500 installed in each autonomous driving vehicle 50 as the vehicle ID of the autonomous driving vehicle 50.

The server 20 is a device that manages the information of the vehicle 40 and multiple autonomous driving vehicles 50 and transmits a patrol instruction to each of the autonomous driving vehicles 50. The server 20 communicates with the vehicle 40 and the multiple autonomous driving vehicles 50 via the network 30. The server 20 includes a communication device 21, a storage device 22, a CPU 23, and a memory (not illustrated), and these components are electrically connected to each other via a bus or the like (not illustrated). The position where the server 20 is installed is not particularly limited. For example, the server 20 is installed in the management center of a business operator that provides regional crime prevention services using the autonomous driving vehicles 50.

In the present embodiment, the server 20, the vehicle 40, and the autonomous driving vehicles 50 are connected to the network 30 by a wireless communication system.

The communication device 21 communicates with each of the vehicle 40 and the autonomous driving vehicles 50 via the network 30. The communication device 21 may be a device having mobile communication functions such as 4G/LTE, or a device having wireless LAN communication functions.

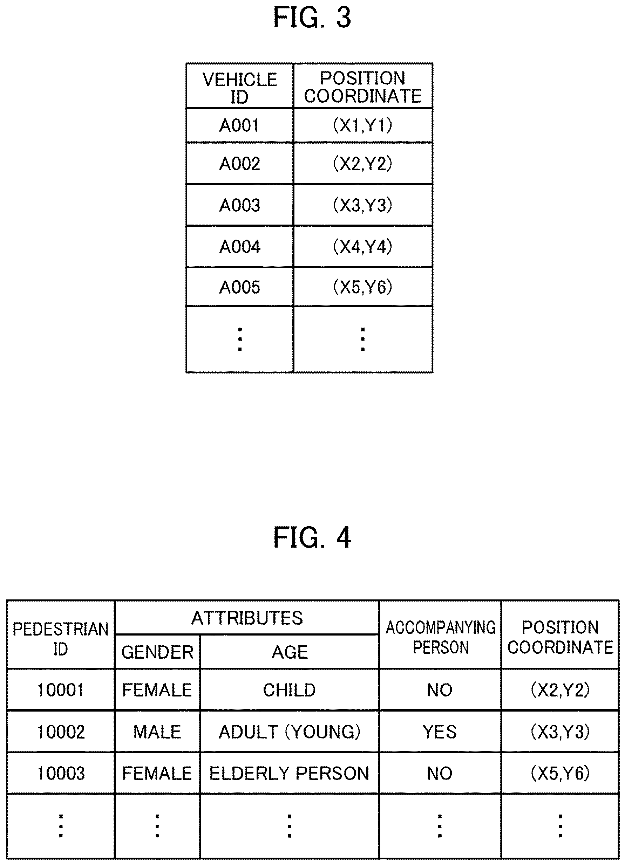

The storage device 22 stores various kinds of information and databases necessary for crime prevention services. The storage device 22 is a storage medium such as an HDD (hard disk drive). The storage device 22 includes, for example, a position information database 221, an attribute information database 222, and a risk value database 223. The details of the above databases will be described later with reference to FIGS. 3 to 5.

The CPU 23 controls the server 20. The CPU 23 reads various programs stored in the storage device 22 or the like into memory and executes various instructions included in the programs. The memory is a storage medium such as a ROM (read only memory) or a RAM (random access memory).

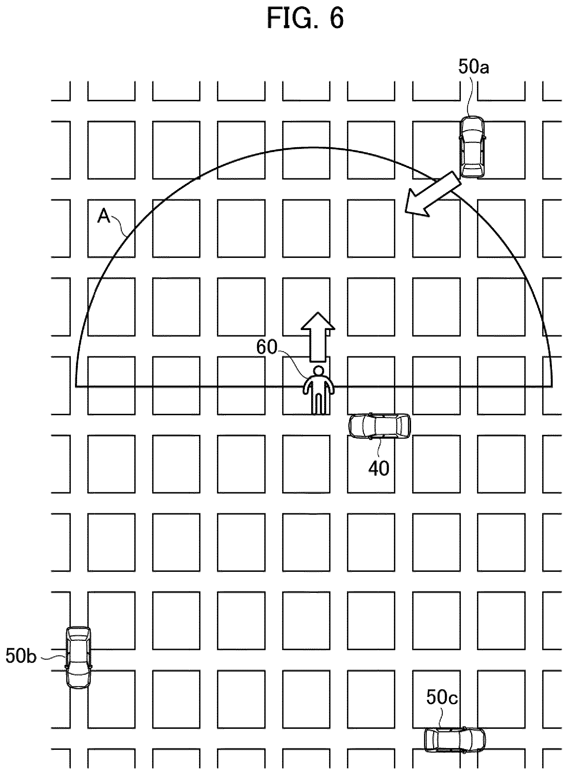

As a functional configuration example, the CPU 23 includes a position information management unit 231, a pedestrian detection unit 232, a pedestrian attribute estimation unit 233, a pedestrian travel area estimation unit 234, a vehicle traffic quantity calculation unit 235, a risk level calculation unit 236, and a patrol instruction unit 237. The details of each function of the CPU 23 will be described later with reference to FIG. 6.

The vehicle 40 is provided with the information transmitter 400 including a communication device 41, a camera 42, a storage device 43, and a GPS receiver 44.

The communication device 41 has the same configuration as that of the communication device 21, and communicates with the server 20 via the network 30.

The camera 42 is an imaging device that captures the outer side of the vehicle 40. The camera 42 captures a subject using an imaging element such as a CCD (charge coupled device) image sensor or a CMOS (complementary metal oxide semiconductor) image sensor. The image acquired by imaging may be either a still image or a moving image. The camera 42 is provided, for example, on the back side of the windshield of the vehicle 40, and captures at least the traveling direction (forward) of the vehicle 40; however, the direction captured by the camera 42 is not limited to a specific direction, and the camera 42 may capture all directions of the vehicle 40. The image captured by the camera 42 is stored in the storage device 43 and transmitted to the server 20 at a discretionary timing. The storage device 43 stores various kinds of information. The storage device 43 is a storage medium such as a RAM, a magnetic disk, or a flash memory.

The position information of the vehicle 40 acquired by the GPS receiver 44 is transmitted to the server 20 at any timing. The GPS receiver 44 receives signals from multiple satellites, and supplies the received signals to a CPU (not illustrated) installed in the GPS receiver 44 to calculate the position information of the vehicle 40 on the ground. Note that GPS is an abbreviation of "Global Positioning System".

The autonomous driving vehicle 50 is a vehicle that travels autonomously on the basis of a patrol instruction received from the server 20. The autonomous driving vehicle 50 is provided with an autonomous driving vehicle control device 500 including a communication device 51, a camera 52, a storage device 53, a GPS receiver 54, and a vehicle ECU (electronic control unit) 55. The configurations of the communication device 51, the camera 52, the storage device 53, and the GPS receiver 54 are the same as those of the communication device 41, the camera 42, the storage device 43, and the GPS receiver 44 included in the information transmission device 400 of the vehicle 40, and thus the description thereof is omitted.

The vehicle ECU 55 is a computer for controlling the traveling of the autonomous driving vehicle 50. The vehicle ECU 55 receives a patrol instruction from the server 20 via the network 30 and controls the autonomous driving vehicle 50 to travel in an appropriate manner, on the basis of the received patrol instruction. The vehicle ECU 55 controls various actuators (brake actuators, accelerator actuators, steering actuators, and the like) on the basis of the patrol instruction.

Next, various databases of the storage device 22 will be described with reference to FIGS. 3 to 5. Although not illustrated, the storage device 22 may further include a database for managing vehicle IDs in association with vehicle information of vehicles to which the vehicle IDs are given, and the server 20 can identify the vehicle 40 and the autonomous driving vehicle 50 by using each of the vehicles ID.

The position information database 221 is a database for managing the position information of each of the vehicle 40 and the autonomous driving vehicle 50. The position information database 221 is configured to store a vehicle ID of each of the vehicle 40 and the autonomous driving vehicle 50, and the information of each position coordinate received from each of the vehicle 40 and the autonomous driving vehicle 50 in real time, as illustrated in FIG. 3 as an example.

The attribute information database 222 stores information about pedestrians detected from the image captured by the vehicle 40. As illustrated in FIG. 4 as an example, the attribute information database 222 is configured to store information about pedestrian IDs, gender, age, the presence or absence of an accompanying person, and position coordinates where each pedestrian was detected, for each pedestrian detected from a captured image. In the following description, the gender and age of a pedestrian may be referred to as an attribute of a pedestrian. The method of detecting a pedestrian and the method of estimating an attribute of a pedestrian and the presence or absence of an accompanying person will be described later. It should be noted that in the example of FIG. 4, the ages of pedestrians are stored in four classifications: a child, an adult (young), an adult (not young), and an elderly person; however, the ages of pedestrians are not limited to such classifications.

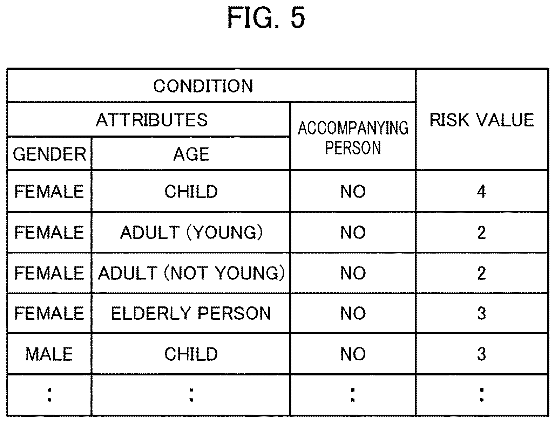

As illustrated in FIG. 5 as an example, the risk value database 223 is configured to store a risk value indicating a risk level of a crime occurring in each preset condition representing a combination of gender, age, and the presence or absence of an accompanying person. For example, the risk value is set to be higher for children and elderly people than for adults, and higher for females than for males. The risk value is also set to be higher for people without an accompanying person than for people with an accompanying person. The risk value is set to be highest for female children without an accompanying person, for example. The risk value database 223 may be configured to store a risk value that is preset for each element such as the gender of a pedestrian, the age of a pedestrian, and the presence or absence of an accompanying person, such as 4 points for children, 3 points for females, 2 points for elderly people, and 2 points for people without an accompanying person. The method of setting a risk value is not particularly limited, and the risk level may be set according to an attribute of a pedestrian from past crime data or the like.

Next, each function of the CPU 23 of the server 20 will be described in detail with reference to FIG. 6. In the example of FIG. 6, the autonomous driving vehicles 50a to 50c are patrolling in one region, the vehicle 40 is traveling on the road, and the pedestrian 60 is present near the vehicle 40. It is assumed that the pedestrian 60 has been captured in an image captured by the vehicle 40. In FIG. 6, the vehicle 40 has the configuration of the vehicle 40 illustrated in FIG. 2, and each piece of position information of the vehicle 40 and the image captured by the vehicle 40 are transmitted to the server 20 via the network 30. The autonomous driving vehicles 50a to 50c have the configuration of the autonomous driving vehicle 50 illustrated in FIG. 2, and transmit the position information of each of the autonomous driving vehicles 50a to 50c to the server 20 via the network 30.

The position information management unit 231 of the CPU 23 collects and manages the position information of the vehicle 40 and the autonomous driving vehicles 50a to 50c registered in advance. For example, the position information management unit 231 receives the position information from each of the vehicle 40 and the autonomous driving vehicles 50a to 50c at a prescribed cycle, associates the received position information with each of the vehicle IDs of the vehicle 40 and the autonomous driving vehicles 50a to 50c, and stores the associated IDs in the position information database 221.

The pedestrian detection unit 232 receives a captured image that is captured by and transmitted from the vehicle 40, and detects the pedestrian 60 from the captured image. In the present embodiment, the pedestrian detection unit 232 detects the pedestrian 60 by analyzing the image captured by the vehicle 40. A known method can be employed for this image analysis. The pedestrian detection unit 232 detects the position information of the pedestrian 60 on the basis of the position information of the vehicle 40 at the time of acquiring the captured image in which the pedestrian 60 is detected.

When the pedestrian 60 is detected by the pedestrian detection unit 232, the pedestrian attribute estimation unit 233 estimates attributes of the pedestrian 60 from the captured image. The pedestrian attribute estimation unit 233 estimates the presence or absence of a person accompanying the pedestrian 60, that is, whether the pedestrian 60 is alone or not alone. In the present embodiment, the pedestrian attribute estimation unit 233 estimates attributes of the pedestrian 60 by further analyzing the captured image in which the pedestrian 60 is detected. A known method can be employed for this image analysis.

The pedestrian attribute estimation unit 233 detects the face of the detected pedestrian 60 and estimates the gender and age of the pedestrian 60, for example. For example, the pedestrian attribute estimation unit 233 estimates whether the age of the pedestrian is that of a child, an adult (young), an adult (not young), or an elderly person. When it is not possible to detect the face of the pedestrian 60 from the captured image, as in the case where the face of the pedestrian 60 is not clearly captured in the captured image, the pedestrian attribute estimation unit 233 may detect the height, posture, hair color, belongings such as a walking stick, and clothing of the pedestrian 60 and estimate the gender and age of the pedestrian 60 from these elements. In addition, when the captured image is a moving image, the walking speed of the pedestrian 60 may be further added to the elements for estimating the gender and age of the pedestrian 60.

The pedestrian attribute estimation unit 233 stores the estimated information about the attributes of the pedestrian 60, the presence or absence of a person accompanying the pedestrian 60, and the position information of the pedestrian 60 in the attribute information database 222.

The pedestrian travel area estimation unit 234 estimates a pedestrian travel area A where the pedestrian 60 will walk, on the basis of the captured image. For example, the pedestrian travel area estimation unit 234 estimates the direction of the body of the pedestrian 60 from the captured image, and estimates the direction of the body of the pedestrian 60 as the traveling direction of the pedestrian 60. When the captured image is a moving image, the pedestrian travel area estimation unit 234 may also estimate the direction in which the pedestrian 60 moves as the traveling direction of the pedestrian 60. In the present embodiment, the pedestrian travel area estimation unit 234 further analyzes the captured image in which the pedestrian 60 is detected, thereby estimating the traveling direction of the pedestrian 60. A known method can be employed for this image analysis.

Based on the point where the pedestrian 60 is detected, the pedestrian travel area estimation unit 234 estimates an area having a radius of X km in the estimated traveling direction of the pedestrian 60 as the pedestrian travel area A where the pedestrian 60 is assumed to walk. For example, based on the point where the pedestrian 60 is detected, the pedestrian travel area estimation unit 234 estimates an area having a radius of 2 km in the estimated traveling direction of the pedestrian 60 as the pedestrian travel area A where the pedestrian 60 is assumed to walk. It should be noted that the estimation method of the pedestrian travel area A is not particularly limited as long as it is possible to estimate the area where the pedestrian 60 is assumed to walk in 10 to 15 minutes.

The vehicle traffic quantity calculation unit 235 calculates a vehicle traffic quantity in the pedestrian travel area A. The vehicle traffic quantity calculation unit 235 refers to the position information database 221 and calculates the number of vehicles 40 and autonomous driving vehicles 50 present in the pedestrian travel area A as the vehicle traffic quantity. Further, the vehicle traffic quantity calculation unit 235 may calculate the number of vehicles 40 and autonomous driving vehicles 50 per unit area as the vehicle traffic quantity, from the number of vehicles 40 and autonomous driving vehicles 50 present in the pedestrian travel area A. The method of calculating the vehicle traffic quantity is not particularly limited. For example, the vehicle traffic quantity calculation unit 235 may detect vehicles from captured images transmitted from each of the multiple vehicles 40 and the multiple autonomous driving vehicles 50 managed by the server 20 and store the position information of the detected vehicles, thereby calculating the vehicle traffic quantity present in the pedestrian travel area A.

The risk level calculation unit 236 calculates a risk level of a pedestrian being targeted in a crime, on the basis of attributes of the pedestrian 60 and the vehicle traffic quantity in the pedestrian travel area A. The risk level calculation unit 236 refers to the risk value database 223 and acquires a risk value of the pedestrian 60 from the attributes of the pedestrian 60 and the presence or absence of a person accompanying the pedestrian 60. For example, when the gender of the pedestrian 60 is "female", the age is "elderly", and the pedestrian 60 has "no accompanying person", the risk level calculation unit 236 acquires the risk value "3" of the pedestrian 60 by referring to the risk value database 223 in FIG. 5.

In addition, the risk level calculation unit 236 may calculate a risk value of the pedestrian 60 by referring to risk values that are preset for each element such as the gender of a pedestrian, the age of a pedestrian, and the presence or absence of an accompanying person illustrated in FIG. 5, and adding points for each element of the pedestrian 60.

For example, the risk level calculation unit 236 determines whether or not the vehicle traffic quantity in the pedestrian travel area A is greater than a preset threshold value for the vehicle traffic quantity. When the vehicle traffic quantity in the pedestrian travel area A is greater than the threshold value, the risk level calculation unit 236 calculates a risk level by multiplying the risk value of the pedestrian 60 by 0.5. In contrast, when the vehicle traffic quantity in the pedestrian travel area A is equal to or less than the threshold value, the risk level calculation unit 236 calculates a risk level by multiplying the risk value of the pedestrian 60 by 1.2. The risk level calculation unit 236 may also calculate a risk level by multiplying the risk value of the pedestrian 60 by the inverse of the vehicle traffic quantity per unit area in the pedestrian travel area A, for example. The method of calculating a risk level is not particularly limited as long as the risk level calculation unit 236 performs a calculation such that the risk level becomes higher when the risk value of the pedestrian 60 is high and when the vehicle traffic quantity in the pedestrian travel area A is small. Other elements such as the position where the pedestrian 60 is detected, the time of day, and illuminance may be used for calculating a risk level, in addition to the attributes of the pedestrian, the presence or absence of an accompanying person, and the vehicle traffic quantity. In addition, a risk level may be calculated using past crime occurrence data.

When the risk level is greater than a preset threshold value, the patrol instruction unit 237 transmits a patrol instruction instructing the autonomous driving vehicle 50 to patrol the pedestrian travel area A, to the autonomous driving vehicle 50. The patrol instruction unit 237 determines whether the risk level calculated by the risk level calculation unit 236 is greater than a preset threshold value for the risk level. When the risk level is greater than the threshold value, the patrol instruction unit 237 refers to the position information database 221 and specifies the autonomous driving vehicle 50a that is patrolling in the closest position to the pedestrian travel area A from among the autonomous driving vehicles 50a to 50c. The patrol instruction unit 237 generates a patrol instruction instructing the autonomous driving vehicle 50a to patrol the pedestrian travel area A. The patrol instruction includes information about a travel route from the current position of the specified autonomous driving vehicle 50a to the pedestrian travel area A, and a patrol route so as to patrol the pedestrian travel area A. The patrol instruction unit 237 transmits the generated patrol instruction to the autonomous driving vehicle 50a, and instructs the autonomous driving vehicle 50a to patrol the pedestrian travel area A.

### [Processing flow of crime prevention device]

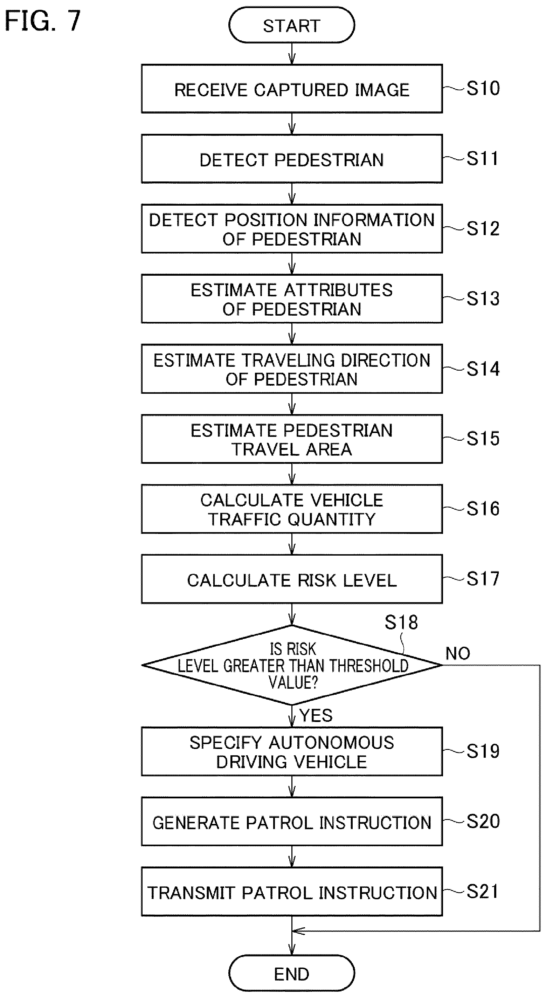

Next, an example of the processing flow of the CPU 23 according to the present embodiment will be described with reference to the flowchart of FIG. 7. In FIG. 7, the vehicle 40 transmits the position information of the vehicle 40 and the image captured by the vehicle 40 to the server 20 via the network 30. The multiple autonomous driving vehicles 50a to 50c transmit the position information of each of the autonomous driving vehicles 50a to 50c to the server 20 via the network 30. The server 20 collects and manages the position information of the vehicle 40 and the autonomous driving vehicles 50a to 50c.

In step S10 of FIG. 7, the pedestrian detection unit 232 receives a captured image that is captured by and transmitted from the vehicle 40.

The processing proceeds to step S11, and the pedestrian detection unit 232 detects the pedestrian 60 by analyzing the image captured by the vehicle 40.

When the pedestrian 60 is detected by the pedestrian detection unit 232, the processing proceeds to step S12, and the pedestrian detection unit 232 detects the position information of the pedestrian 60 on the basis of the position information of the vehicle 40 at the time of acquiring the captured image in which the pedestrian 60 is detected.

The processing proceeds to step S13, and the pedestrian attribute estimation unit 233 estimates the attributes of the pedestrian 60 from the captured image. The pedestrian attribute estimation unit 233 estimates the presence or absence of a person accompanying the pedestrian 60. The pedestrian attribute estimation unit 233 stores estimated information about the attributes of the pedestrian 60, the presence or absence of a person accompanying the pedestrian 60, and the position information of the pedestrian 60 in the attribute information database 222.

The processing proceeds to step S14, and the pedestrian travel area estimation unit 234 estimates the direction of the body of the pedestrian 60 from the captured image, and estimates the direction of the body of the pedestrian 60 as the traveling direction of the pedestrian 60. When the captured image is a moving image, the pedestrian travel area estimation unit 234 may also estimate the direction in which the pedestrian 60 moves as the traveling direction of the pedestrian 60.

The processing proceeds to step S15, and the pedestrian travel area estimation unit 234 estimates an area having a radius of X km in the estimated traveling direction of the pedestrian 60 as the pedestrian travel area A where the pedestrian 60 is assumed to walk, based on the point where the pedestrian 60 is detected.

The processing proceeds to step S16, and the vehicle traffic quantity calculation unit 235 calculates the vehicle traffic quantity in the pedestrian travel area A. For example, the vehicle traffic quantity calculation unit 235 refers to the position information database 221, and calculates the number of vehicles 40 and autonomous driving vehicles 50 present in the pedestrian travel area A as the vehicle traffic quantity. Further, the vehicle traffic quantity calculation unit 235 may calculate the number of vehicles 40 and autonomous driving vehicles 50 per unit area as the vehicle traffic quantity, from the number of vehicles 40 and autonomous driving vehicles 50 present in the pedestrian travel area A.

The processing proceeds to step S17, and the risk level calculation unit 236 calculates a risk level of a pedestrian being targeted in a crime, on the basis of the attributes of the pedestrian 60 and the vehicle traffic quantity in the pedestrian travel area A. For example, the risk level calculation unit 236 refers to the risk value database 223 and acquires a risk value of the pedestrian 60 from the attributes of the pedestrian 60 and the presence or absence of a person accompanying the pedestrian 60. For example, the risk level calculation unit 236 determines whether the vehicle traffic quantity in the pedestrian travel area A is greater than a preset threshold value for the vehicle traffic quantity. When the vehicle traffic quantity in the pedestrian travel area A is greater than the threshold value, the risk level calculation unit 236 calculates a risk level by multiplying the risk value of the pedestrian 60 by 0.5. In contrast, when the vehicle traffic quantity in the pedestrian travel area A is equal to or less than the threshold value, the risk level calculation unit 236 calculates a risk level by multiplying the risk value of the pedestrian 60 by 1.2.

The processing proceeds to step S18, and the patrol instruction unit 237 determines whether the risk level calculated by the risk level calculation unit 236 in step S17 is greater than a preset threshold value for the risk level. When the risk level is greater than the threshold value (YES in step S18), the processing proceeds to step S19. In contrast, when the risk level is equal to or less than the threshold value (NO in step S18), the CPU 23 terminates the processing in FIG. 7.

In step S19, the patrol instruction unit 237 refers to the position information database 221 and specifies the autonomous driving vehicle 50a that is patrolling in the closest position to the pedestrian travel area A from among the autonomous driving vehicles 50a to 50c.

The processing proceeds to step S20, and the patrol instruction unit 237 generates a patrol instruction instructing the autonomous driving vehicle 50a to patrol the pedestrian travel area A. The patrol instruction includes information about a travel route from the current position of the specified autonomous driving vehicle 50a to the pedestrian travel area A, and about a patrol route so as to patrol the pedestrian travel area A.

The processing proceeds to step S21, and the patrol instruction unit 237 transmits the generated patrol instruction to the autonomous driving vehicle 50a that is specified in step S19, and the CPU23 terminates the processing in FIG. 7. The autonomous driving vehicle 50a receives the patrol instruction, generates an operation plan according to the received patrol instruction, and travels according to the generated operation plan.

### (Modified example 1)

In the above description, the vehicle traffic quantity calculation unit 235 calculates a vehicle traffic quantity in the pedestrian travel area A, and the patrol instruction unit 237 transmits a patrol instruction instructing the autonomous driving vehicle 50a to patrol the pedestrian travel area A, to the autonomous driving vehicle 50a when a risk level is greater than a preset threshold value. However, the vehicle traffic quantity calculation unit 235 may divide a pedestrian travel area A into multiple areas and further calculate a vehicle traffic quantity in each of the divided pedestrian travel areas A. When the risk level is greater than a preset threshold value, the patrol instruction unit 237 may transmit to the autonomous driving vehicle 50a, a patrol instruction instructing the autonomous driving vehicle 50a to patrol in each of the divided pedestrian travel areas, according to the vehicle traffic quantity in each of the divided pedestrian travel areas A.

For example, the patrol instruction unit 237 may adjust the number of vehicles patrolling in each of the divided pedestrian travel areas A, on the basis of the vehicle traffic quantity in each of the divided pedestrian travel areas A. For example, when the vehicle traffic quantity in one area of the divided pedestrian travel areas A is greater than a preset threshold value and when the vehicle traffic quantity in the other areas is less than a preset threshold value, the patrol instruction unit 237 may be configured not to instruct patrolling of one area where the vehicle traffic quantity is large. Thereafter, the patrol instruction unit 237 may transmit a patrol instruction instructing two autonomous driving vehicles 50a and 50b to patrol only the other areas where the vehicle traffic quantity is small, to the two autonomous driving vehicles 50a and 50b. This makes it possible to generate a patrol instruction so as to increase the number of mobile bodies patrolling the areas where the vehicle traffic quantity is particularly small when the range of the pedestrian travel area A is set wide, thereby achieving crime prevention more efficiently.

For example, the patrol instruction unit 237 may limit the areas that are patrolled in the divided pedestrian travel areas A on the basis of the vehicle traffic quantity in each of the divided pedestrian travel areas A. For example, when the vehicle traffic quantity in one area of the divided pedestrian travel areas A is greater than a preset threshold value and when the vehicle traffic quantity in the other areas is less than a preset threshold value, the patrol instruction unit 237 may be configured not to instruct patrolling of one area where the vehicle traffic quantity is large. Thereafter, the patrol instruction unit 237 may generate a patrol instruction instructing the autonomous driving vehicle 50a to patrol only the other areas. This makes it possible to generate a patrol instruction to patrol only the areas where the vehicle traffic quantity is particular small when the range of the pedestrian travel area A is set wide, thereby achieving crime prevention more efficiently.

### (Modified example 2)

In the above description, the crime prevention device according to the present embodiment has been described with reference to a case where an autonomous driving vehicle 50 is used as a mobile body to which a patrol instruction is transmitted. However, a different type of mobile body may be used in some cases, depending on the type of crime in which a pedestrian is likely to be targeted. For example, a mobile body with surveillance capabilities, such as an autonomous driving vehicle 50 that is provided with a camera, is suitable for the prevention of crimes such as accosting other people, forcibly taking a person from one place to another, and molesting women. In addition, a mobile body with tracking capabilities, such as a drone, is suitable for the prevention of crimes such as bag-snatching.

Further, the type of crime in which a pedestrian is likely to be targeted can be roughly estimated from the attributes of the pedestrian. For example, the type of crime in which a pedestrian is likely to be targeted can be estimated from the attributes of the pedestrian in that children are more likely to be accosted or forcibly taken from one place to another, young females are more likely to be molested, and elderly people and females carrying luggage are more likely to have their bags snatched.

For this reason, when the crime prevention system 1 is provided with multiple types of mobile bodies to which a patrol instruction is transmitted, the patrol instruction unit 237 may determine the type of mobile body to which the patrol instruction is transmitted on the basis of a type of crime that is preset corresponding to the attributes of a pedestrian, and transmit the patrol instruction to the mobile body. When a captured image is a moving image, the pedestrian detection unit 232 may detect that an incident such as extortion, assault, or bodily harm has occurred from the moving image. Further, when an incident such as extortion, assault, or bodily harm has occurred, the patrol instruction unit 237 may transmit a patrol instruction instructing a manned vehicle with a person on board who can arrest a criminal to proceed to the point where the incident has been detected. The patrol instruction unit 237 transmits the patrol instruction to a mobile body suitable for the type of crime which is estimated from the attributes of a pedestrian and in which the pedestrian is likely to be targeted, thereby further achieving crime prevention more efficiently using such a mobile body.

In addition, multiple mobile bodies may be used in some cases, depending on the type of crime in which a pedestrian is likely to be targeted. For this reason, the patrol instruction unit 237 may determine the number of mobile bodies to which a patrol instruction is transmitted on the basis of a type of crime that is preset corresponding to the attributes of the pedestrian, and transmit the patrol instruction to the multiple mobile bodies. The patrol instruction unit 237 transmits the patrol instruction to the number of mobile bodies corresponding to the type of crime in which the pedestrian is likely to be targeted, thereby further achieving crime prevention more efficiently using such mobile bodies.

### [Operational effect]

As described above, the embodiment makes it possible to achieve the following operational effects.

A crime prevention device according to an embodiment includes a pedestrian detection unit, a pedestrian attribute estimation unit, a pedestrian travel area estimation unit, a vehicle traffic quantity calculation unit, a risk level calculation unit, and a patrol instruction unit. The pedestrian detection unit receives a captured image transmitted from a vehicle and detects a pedestrian from the captured image. The pedestrian attribute estimation unit estimates attributes of the pedestrian from the captured image. The pedestrian travel area estimation unit estimates a pedestrian travel area where the pedestrian will walk based on the captured image. The vehicle traffic quantity calculation unit calculates a vehicle traffic quantity in the pedestrian travel area. The risk level calculation unit calculates a risk level of the pedestrian being targeted in a crime, based on the attributes of the pedestrian and the vehicle traffic quantity in the pedestrian travel area. The patrol instruction unit transmits to a mobile body, a patrol instruction instructing the mobile body to patrol the pedestrian travel area, when the risk level is greater than a preset threshold value.

This makes it possible to calculate a risk level of a pedestrian being targeted in a crime, based on attributes of the pedestrian and the vehicle traffic quantity in the pedestrian travel area. The risk level can be set higher when the pedestrian has an attribute indicating that the pedestrian is likely to be targeted in a crime and when the pedestrian walks in an area where the vehicle traffic quantity is small. When the risk level is greater than a threshold value, it is possible to transmit a patrol instruction instructing a mobile body to patrol the pedestrian travel area, to the mobile body. This makes it possible to further achieve crime prevention more efficiently using a mobile body.

In addition, the vehicle traffic quantity calculation unit of the crime prevention device according to the embodiment divides the pedestrian travel area into multiple areas and further calculates a vehicle traffic quantity in each of the divided pedestrian travel areas. The patrol instruction unit transmits to the mobile body, a patrol instruction instructing the mobile body to patrol each of the divided pedestrian travel areas according to the vehicle traffic quantity in each of the divided pedestrian travel areas, when the risk level is greater than the preset threshold value.

This makes it possible to generate a patrol instruction that adjusts the number of mobile bodies to be made to patrol, based on the vehicle traffic quantity in each of the divided pedestrian travel areas. It is possible to generate a patrol instruction so as to increase the number of mobile bodies patrolling the areas where the vehicle traffic quantity is particularly small when the range of the pedestrian travel area is set wide. Further, it is possible to generate a patrol instruction instructing a mobile body to patrol only a limited area on the basis of the vehicle traffic quantity in each of the divided pedestrian travel areas. Further, it is possible to generate a patrol instruction to patrol only the areas where the vehicle traffic quantity is particular small when the range of the pedestrian travel area is set wide. This makes it possible to further achieve crime prevention more efficiently using mobile bodies.

In addition, the patrol instruction unit of the crime prevention device according to the embodiment determines the type of the mobile body to which the patrol instruction is transmitted, based on a type of crime that is preset corresponding to the attributes of the pedestrian.

This makes it possible to transmit the patrol instruction to the mobile body corresponding to the type of crime in which a pedestrian is likely to be targeted. It is possible to instruct a mobile body which is suitable for the prevention of a crime in which a pedestrian is likely to be targeted to patrol the pedestrian travel area. This makes it possible to achieve crime prevention more efficiently using a mobile body.

In addition, the patrol instruction unit of the crime prevention device according to the embodiment determines the number of mobile bodies to which the patrol instruction is transmitted, based on a type of crime that is preset corresponding to the attributes of the pedestrian.

This makes it possible to transmit the patrol instruction to the number of mobile bodies corresponding to the type of crime in which a pedestrian is likely to be targeted. It is possible to instruct the number of mobile bodies suitable for the prevention of the crime in which a pedestrian is likely to be targeted to patrol the pedestrian travel area. This makes it possible to achieve crime prevention more efficiently using mobile bodies.

As described above, although the embodiment of the present invention has been described, it should not be understood that the statements and drawings forming part of this disclosure are intended to limit the present invention. Various alternative embodiments, examples, and operational techniques will be apparent to those skilled in the art within the scope of the invention, which is defined by the appended claims.

## Claims

1. A crime prevention system (23) comprising:
at least a vehicle (40) and an autonomous vehicle (50) and a server (20); the server comprising a crime prevention device (23), the crime prevention device (23) comprising:
a pedestrian detection unit (232) that is configured to receive a captured image transmitted from the vehicle (40) and detects a pedestrian (60) from the captured image;
a pedestrian attribute estimation unit (233) that is configured to estimate an attribute of the pedestrian (60) from the captured image;
a pedestrian travel area estimation unit (234) that is configured to estimate a pedestrian travel area (A) where the pedestrian (60) will walk into based on the captured image;
a vehicle traffic quantity calculation unit (235) that is configured to calculate a vehicle traffic quantity in the pedestrian travel area (A), wherein the vehicle traffic quantity is the number of the vehicles (40) and of autonomous driving vehicles (50) present in the pedestrian travel area (A);
a risk level calculation unit (236) that is configured to calculate a risk level of the pedestrian (60) being targeted in a crime, based on the attribute of the pedestrian (60) and the vehicle traffic quantity in the pedestrian travel area (A); and
a patrol instruction unit (237) that is configured to transmit to an autonomous vehicle (50) a patrol instruction instructing the autonomous vehicle (50) to patrol the pedestrian travel area (A), when the risk level is greater than a preset threshold value.

2. The crime prevention system according to claim 1, wherein the vehicle traffic quantity calculation unit (235) is configured to divide the pedestrian travel area (A) into multiple areas and further calculate a vehicle traffic quantity in each of the divided pedestrian travel areas, and the patrol instruction unit (237) is configured to transmit to the autonomous driving vehicle (50) a patrol instruction instructing the autonomous driving vehicle (50) to patrol each of the divided pedestrian travel areas according to the vehicle traffic quantity in each of the divided pedestrian travel areas, when the risk level is greater than the preset threshold value.

3. The crime prevention system according to claim 1 or 2, wherein the patrol instruction unit (237) is configured to determine a type of the mobile body to which the patrol instruction is transmitted, based on a type of crime that is preset corresponding to the attribute of the pedestrian (60).

4. The crime prevention system according to claim 1 or 2, wherein
the patrol instruction unit (237) is configured to the number of autonomous vehicles to which the patrol instruction is transmitted, based on a type of crime that is preset corresponding to an attribute of the pedestrian (60).

5. A crime prevention method implemented by a server (20) and comprising:
receiving a captured image transmitted from a vehicle (40);
detecting a pedestrian (60) from the captured image; estimating an attribute of the pedestrian (60) from the captured image;
estimating a pedestrian travel area (A) where the pedestrian (60) will walk into based on the captured image;
calculating a vehicle traffic quantity in the pedestrian travel area (A), wherein the vehicle traffic quantity is the number of the vehicles (40) and of autonomous driving vehicles (50) present in the pedestrian travel area (A);
calculating a risk level of the pedestrian (60) being targeted in a crime, based on the attribute of the pedestrian (60) and the vehicle traffic quantity in the pedestrian travel area (A); and
transmitting to an autonomous driving vehicle (50) a patrol instruction instructing the autonomous driving vehicle (50) to patrol the pedestrian travel area (A), when the risk level is greater than a preset threshold value.

## Patentansprüche

1. System (23) zum Verhindern von Straftaten, umfassend: mindestens ein Fahrzeug (40) und ein autonomes Fahrzeug (50) und einen Server (20) ; wobei der Server eine Vorrichtung (23) zum Verhindern von Straftaten umfasst, wobei die Vorrichtung (23) zum Verhindern von Straftaten umfasst:
eine Einheit (232) zum Detektieren von Fußgängern, die konfiguriert ist, um ein aufgenommenes Bild zu empfangen, das von dem Fahrzeug (40) übertragen wird, und einen Fußgänger (60) aus dem aufgenommenen Bild detektiert;
eine Einheit (233) zum Schätzen von Fußgängerattributen, die konfiguriert ist, um ein Attribut des Fußgängers (60) aus dem aufgenommenen Bild zu schätzen;
eine Einheit (234) zum Schätzen eines Fußgängerbereichs, die konfiguriert ist, um einen Fußgängerbereich (A) , in den der Fußgänger (60) gehen wird, basierend auf dem aufgenommenen Bild zu schätzen;
eine Einheit (235) zum Berechnen einer Fahrzeugverkehrsmenge, die konfiguriert ist, um eine Fahrzeugverkehrsmenge in dem Fußgängerbereich (A) zu berechnen, wobei die Fahrzeugverkehrsmenge die Anzahl der Fahrzeuge (40) und der autonom fahrenden Fahrzeuge (50) ist, die in dem Fußgängerbereich (A) vorhanden sind;
eine Einheit (236) zum Berechnen eines Risikoniveaus, die konfiguriert ist, um ein Risikoniveau des Fußgängers (60) Opfer einer Straftat zu werden zu berechnen, basierend auf dem Attribut des Fußgängers (60) und der Fahrzeugverkehrsmenge in dem Fußgängerbereich (A) ; und
eine Einheit (237) zum Anweisen einer Überwachung, die konfiguriert ist, um an ein autonomes Fahrzeug (50) eine Anweisung zum Überwachen zu übertragen, die das autonome Fahrzeug (50) anweist, den Fußgängerbereich (A) zu überwachen, wenn das Risikoniveau größer als ein voreingestellter Schwellenwert ist.

2. System zum Verhindern von Straf taten nach Anspruch 1, wobei
die Einheit (235) zum Berechnen einer Fahrzeugverkehrsmenge konfiguriert ist, um den Fußgängerbereich (A) in mehrere Bereiche zu unterteilen und ferner eine Fahrzeugverkehrsmenge in jedem der unterteilten Fußgängerbereiche zu berechnen, und
die Einheit (237) zum Anweisen einer Überwachung konfiguriert ist, um an das autonom fahrende Fahrzeug (50) eine Anweisung zum Überwachen zu übertragen, die das autonom fahrende Fahrzeug (50) anweist, jeden der unterteilten Fußgängerbereiche gemäß der Fahrzeugverkehrsmenge in jedem der unterteilten Fußgängerbereiche zu überwachen, wenn das Risikoniveau größer als der voreingestellte Schwellenwert ist.

3. System zum Verhindern von Straftaten nach Anspruch 1 oder 2, wobei
die Einheit (237) zum Anweisen einer Überwachung konfiguriert ist, um einen Typ des mobilen Körpers, an den die Anweisung zum Überwachen übertragen wird, basierend auf einem Typ einer Straftat zu bestimmen, der entsprechend dem Attribut des Fußgängers (60) voreingestellt ist.

4. System zum Verhindern von Straftaten nach Anspruch 1 oder 2, wobei
die Einheit (237) zum Anweisen einer Überwachung konfiguriert ist, um die Anzahl der autonomen Fahrzeuge, an die die Anweisung zum Überwachen übertragen wird, basierend auf einem Typ einer Straf tat zu bestimmen, der entsprechend einem Attribut des Fußgängers (60) voreingestellt ist.

5. Verfahren zum Verhindern von Straftaten, das durch einen Server (20) implementiert ist und umfasst:
Empfangen eines aufgenommenen Bildes, das von einem Fahrzeug (40) übertragen wird;
Detektieren eines Fußgängers (60) aus dem aufgenommenen Bild;
Schätzen eines Attributs des Fußgängers (60) aus dem aufgenommenen Bild;
Schätzen eines Fußgängerbereichs (A), in den der Fußgänger (60) gehen wird, basierend auf dem aufgenommenen Bild;
Berechnen einer Fahrzeugverkehrsmenge in dem Fußgängerbereich (A) , wobei die Fahrzeugverkehrsmenge die Anzahl der Fahrzeuge (40) und der autonom fahrenden Fahrzeuge (50) ist, die in dem Fußgängerbereich (A) vorhanden sind;
Berechnen eines Risikoniveaus des Fußgängers (60) Opfer einer Straftat zu werden, basierend auf dem Attribut des Fußgängers (60) und der Fahrzeugverkehrsmenge in dem Fußgängerbereich (A) ; und
Übertragen an ein autonomes Fahrzeug (50) einer Anweisung zum Überwachen, die das autonome Fahrzeug (50) anweist, den Fußgängerbereich (A) zu überwachen, wenn das Risikoniveau größer als ein voreingestellter Schwellenwert ist.

## Revendications

1. Système de prévention du crime (23) comprenant : au moins un véhicule (40) et un véhicule autonome (50) et un serveur (20) ; le serveur comprenant un dispositif de prévention du crime (23), le dispositif de prévention du crime (23) comprenant :
une unité de détection de piéton (232) qui est configurée pour recevoir une image capturée transmise depuis le véhicule (40) et détecte un piéton (60) à partir de l'image capturée ;
une unité d'estimation d'attribut de piéton (233) qui est configurée pour estimer un attribut du piéton (60) à partir de l'image capturée ;
une unité d'estimation de zone de piéton (234) qui est configurée pour estimer une zone de piéton (A) dans laquelle le piéton (60) marchera sur la base de l'image capturée ;
une unité de calcul de quantité de trafic de véhicule (235) qui est configurée pour calculer une quantité de trafic de véhicule dans la zone de piéton (A) , dans lequel la quantité de trafic de véhicule est le nombre de véhicules (40) et de véhicules à conduite autonome (50) présents dans la zone de piéton (A) ;
une unité de calcul de niveau de risque (236) qui est configurée pour calculer un niveau de risque du piéton (60) étant ciblé dans un crime, sur la base de l'attribut du piéton (60) et de la quantité de trafic de véhicule dans la zone de piéton (A) ; et
une unité d'instruction de patrouille (237) qui est configurée pour transmettre à un véhicule autonome (50), une instruction de patrouille ordonnant au véhicule autonome (50) de patrouiller la zone de piéton (A) , lorsque le niveau de risque est supérieur à une valeur de seuil prédéfinie.

2. Système de prévention de crime selon la revendication 1, dans lequel
l'unité de calcul de quantité de trafic de véhicule (235) est configurée pour diviser la zone de piéton (A) en de multiples zones et calculer en outre une quantité de trafic de véhicule dans chacune des zones de piéton divisées, et
l'unité d'instruction de patrouille (237) est configurée pour transmettre au véhicule à conduite autonome (50), une instruction de patrouille ordonnant au véhicule à conduite autonome (50) de patrouiller chacune des zones de piéton divisées selon la quantité de trafic de véhicule dans chacune des zones de piéton divisées, lorsque le niveau de risque est supérieur à la valeur de seuil prédéfinie.

3. Système de prévention de crime selon la revendication 1 ou 2, dans lequel
l'unité d'instruction de patrouille (237) est configurée pour déterminer un type du corps mobile auquel l'instruction de patrouille est transmise, sur la base d'un type de crime qui est prédéfini correspondant à l'attribut du piéton (60) .

4. Système de prévention de crime selon la revendication 1 ou 2, dans lequel
l'unité d'instruction de patrouille (237) est configurée pour le nombre de véhicules autonomes auxquels l'instruction de patrouille est transmise, sur la base d'un type de crime qui est prédéfini correspondant à un attribut du piéton (60) .

5. Procédé de prévention du crime mis en œuvre par un serveur (20) et comprenant :
recevoir une image capturée transmise depuis un véhicule (40) ;
détecter un piéton (60) à partir de l'image capturée ;
estimer un attribut du piéton (60) à partir de l'image capturée ;
estimer une zone de piéton (A) dans laquelle le piéton (60) marchera sur la base de l'image capturée ;
calculer une quantité de trafic de véhicule dans la zone de piéton (A) , dans lequel la quantité de trafic de véhicule est le nombre de véhicules (40) et de véhicules à conduite autonome (50) présents dans la zone de piéton (A) ;
calculer un niveau de risque du piéton (60) étant ciblé dans un crime, sur la base de l'attribut du piéton (60) et de la quantité de trafic de véhicule dans la zone de piéton (A) ; et
transmettre à un véhicule autonome (50), une instruction de patrouille ordonnant au véhicule autonome (50) de patrouiller la zone de piéton (A) , lorsque le niveau de risque est supérieur à une valeur de seuil prédéfinie.
